# EUROPEAN PATENT APPLICATION

(11) **EP 2 160 051 A1**
(43) Date of publication of application: **03.03.2010**
(21) Application number: 08163357.0
(22) Date of filing: 01.09.2008
(51) Int. Cl.: H04W 4/12, H04L 12/58, H04W 4/14, H04L 29/08, H04W 8/18, H04W 4/18

(54) **Methods and devices for messaging**

(71) Applicant: Nokia Siemens Networks OY, 02610 Espoo (FI)
(72) Inventor: Kasanen, Pertti, 00150 Helsinki (FI); Mäkeläinen, Sami, 00380 Helsinki (FI)
(74) Representative: Äkräs, Tapio Juhani

(57) **Abstract**

When a communication device, such as an IP server or a user device, fails to send a message to a recipient user device via a first messaging service, such as an Internet Protocol based messaging service, the communication device sends a wake-up message to the recipient user device via a second messaging service, such as a short message service, SMS, to trigger a connection establishment for the first messaging service at the recipient user device. The messaging may then continue via the first messaging service using the established connection.

## Description

### FIELD OF THE INVENTION

The present invention relates to messaging services, and particularly to securing the delivery of messages.

### BACKGROUND OF THE INVENTION

Messaging generally refers to a set of features that let a user create, store, send, receive, and manage different types of messages or discrete media between two or more users. Messaging may be based on store and forward, store and retrieve, store and push functions, or peer-to-peer messaging (P2P). Examples of messaging services include discrete media (e.g. text messages) between two or more users, such as Short Message Service (SMS), Multimedia Messaging Service (MMS), email, IMPS (Instant Messaging and Presence Service), Extensible Messaging and Presence Protocol (XMPP), peer-to-peer messaging (P2P), Simple/IM (SIP for Instant Messaging and Presence Leveraging Extensions/Instant Messaging), Voice over IP calls, PoC (Push-to-talk over Cellular).

Messaging services may employ a variety of communication technologies and access networks. Many of the new messaging services employ internet protocol (IP) based technologies, or more particularly Session Initiation Protocol (SIP) or Extensible Messaging and Presence Protocol (XMPP) based technologies. SIP and XMPP are IETF (Internet Engineering Task Force) application-layer protocols. SIP is a control (signaling) protocol for creating, modifying, and terminating sessions with one or more participants. XMPP is an XML technology for presence and real-time communication.

IP Multimedia Subsystem (IMS) is a 3rd Generation Partnership Project (3GPP) standardised network architecture that provides an access network independent standardised interface for creating services, charging mechanisms and better Quality of Service (QoS) than best effort. Examples of the services that are implemented on IMS at the moment are PSTN functionality, Push-to-talk over cellular (PoC), Presence, Instant messaging and video sharing. A Converged IP Messaging (CPM) workgroup inside the Open Mobile Alliance, OMA, aims to remove the silos between traditional messaging services caused by technical differences, and provide users with a smooth, unified service experience. These aims are defined in the document "Converged IP Messaging Requirements, Candidate Version 1.0", 6 November 2007 (OMA-RD-CPM-V1_0-20071106-C).

Individual user devices may support a plurality of different messaging services. The user may choose a messaging service for sending a message based on any suitable criterion, such as the price of the message delivery, availability of the recipient, etc. Usually the aim is to deliver the message through the most suitable messaging service without worrying sender of the used messaging service, while the delivery is guaranteed. The messaging application may use the least-cost (cheapest) messaging service that seem to be available (usually the availability is based on the presence information of the recipient) and if the least-cost messaging service is not available, the messaging application may automatically use or propose to use an alternative messaging service. Information on the availability of the recipient user may be obtained from a presence service. The presence service allows mobile phone users to publish their current presence information and retrieve the presence information of other users of the service. Presence information includes, for example, the user's availability, location, and communication preferences. In the presence-based systems it may happen that the presence information is not always up-to-date; consequently, the user may try to use a messaging service that is not actually available.

The message from the sending user device is typically routed to a messaging system element, such as a server or a service center, to be delivered to the recipient user. The messaging system element may deliver the message to the recipient using the same messaging service as the sender, or using another messaging service, based on a suitable criterion, such as the preference of the recipient user. If the recipient is not available and the message cannot be delivered, the store and forward function of the messaging system element may store the message until the recipient again becomes available (online) for the selected messaging service and the message can be delivered. This procedure is referred to as an offline message delivery herein. The messaging system element may also notify the sender about the offline message delivery.

One reason for the offline delivery or the failed delivery of a message is that the sending user or the messaging system element observes, e.g. based on the presence service or like, that the recipient user is not active in the selected messaging service and there is no reason to even attempt to deliver the message online.

Another reason for the offline delivery or the failed delivery of a message is that a client application for the selected messaging service is not running. The user may have closed the client application (many mobile terminals are able to run only one user application at time) or the user terminal may close background applications in order to free memory for actively used applications. It is also possible that the user has shut down the terminal or turned it on again after a shutdown, so that the client application is not yet started. In any case, the user is unreachable due to the missing client application.

Still another reason for the offline delivery or the failed delivery of a message is that the recipient user is unreachable due to dropped connections. The underlying communication networks, especially wireless networks, often monitor the communication activity on a setup connection, and if there is no communication (e.g. messages) sent on the connection for a preset time, the network assumes that the communication has ended and drops the connection in order to save network resources. For example, in a real-time IM conversation, typical network timeouts of 5-10 minutes are long enough for the user experience of continuing a paused conversation. If there are no messages during that period the real-time conversation can be considered as ended. However, some applications, such as instant messaging, are meaningful only if the receiving party is always available, even after considerably long periods of time from the previous conversation. The existing solution for instant messaging IM (and other) clients is to employ keep-alive messages for providing a so-called always-on functionality. These are messages that are sent between the client in the user device and a server in the Internet whether or not there is any actual traffic to send.

It is a known problem that such always-on mobile applications tend to consume unacceptable amounts of battery power in a mobile device, when such keep-alive messages are transmitted frequently over the radio, often limiting the battery life to less than one working day.

New features have been designed for networks that gradually reduce the battery consumption. These will take several years to be in use and will not fully solve the problem. Better solutions and solutions in multiple architecture layers are needed to make services like instant messaging a success in mobile use.

### BRIEF DESCRIPTION OF THE INVENTION

An object of the present invention is to provide an enhanced mechanism for delivering messages. The object of the invention is achieved by means of methods, a communication device and a program as claimed in the independent claims. The preferred embodiments of the invention are disclosed in the dependent claims.

According to an aspect of the invention, when a communication device cannot send a message to a recipient user device via a first messaging service, the communication device sends a wake-up message to the recipient user device via a second messaging service to trigger a connection establishment for said first messaging service at the recipient user device so that the messaging can be continued via the first messaging service over the new connection, if the connection establishment is successful.

According to another aspect of the invention, when a recipient user device receives a wake-up message via a second messaging service from a first communication device, the recipient user device initiates a connection establishment for a first messaging service and continues messaging via the first messaging service using the connection, if the connection establishment is successful.

According to an embodiment of the invention, if a connection establishment for the first messaging service is not possible in response to the wakeup message, the recipient user device continues messaging via the second messaging service.

According to an embodiment of the invention, the wakeup message contains at least portion of a content of the first message whose delivery via the first messaging service failed.

According to an embodiment of the invention, the recipient user device displays a message content of the wake-up message to a user of the recipient user device.

According to an embodiment of the invention, the connection establishment comprises establishing the connection for the first messaging service in response to the wake-up message, only if permission is inputted through a user interface by a user of the recipient user device.

According to an embodiment of the invention, the connection establishment comprises establishing the connection for the first messaging service automatically by the recipient user device in response to receiving the wake-up message.

According to an embodiment of the invention, the first messaging service comprises an Internet Protocol based messaging service. According to an embodiment of the invention, the first messaging service comprises an instant messaging service.

According to an embodiment of the invention, the second messaging service comprises a text message service or a multimedia messaging service over mobile communication media. According to an embodiment of the invention, the second messaging service comprises a short message service, SMS, or a multimedia message service, MMS, or a wireless application protocol service, WAP.

According to an embodiment of the invention, the first communication device comprises a network server of the first messaging service that relays the messaging of the first messaging service between the first communication device and an originating user device.

According to an embodiment of the invention, the first communication device comprises a user device which originally sent the first message of the first messaging service.

According to an embodiment of the invention, the wakeup message is sent using OMA Service Indication or OMA Service Load message features embedded in the wakeup message according to the second messaging service.

A further aspect of the invention is a user device or like which is configured to perform functionality of the first communication device according to any embodiment of the invention.

A further aspect of the invention is a network element, such as a server, which is configured to perform functionality of the first communication device according to any embodiment of the invention.

A further aspect of the invention is a user device or like which is configured to perform functionality of the recipient user device according to any embodiment of the invention.

An aspect of the invention is a program containing an executable code configured to perform the functionality of the first communication device according to any embodiment of the invention when executed in a computing device.

An aspect of the invention is a program containing an executable code configured to perform the functionality of the recipient user device according to any embodiment of the invention when executed in a computing device.

An aspect of the invention is a computer-readable storage medium comprising program code configured to perform the functionality according to any embodiment of the invention when executed in a computing device.

The advantages of the embodiments of the invention are numerous. They include, but are not limited to: 1) Greatly increased battery life due to no need for keep-alive messages. 2) Flexible implementation options. 3) Ability to continue the IM session over an alternative channel, if necessary. 4) No need for any changes in the operator network. 5) Changes are necessary only in the user device or in the service provider server involved, but not in both. 6) Allows operators to offer this type of functionality as a service. 7) Majority of reachability problems are overcome by restoring the connection and/or the client application by means of the wakeup message.

### BRIEF DESCRIPTION OF THE DRAWINGS

In the following the invention will be described in greater detail by means of exemplary embodiments with reference to the attached drawings, in which
Figure 1 shows a simplified block diagram illustrating exemplary system architecture wherein the principles of the present invention may be applied;
Figure 2 is a messaging diagram illustrating an exemplary messaging event according to an embodiment of the invention;
Figure 3 is a messaging diagram illustrating an exemplary messaging event according to another embodiment of the invention:
Figure 4 is a flow diagram illustrating operation of a messaging server according to an exemplary embodiment of the invention;
Figure 5 is a flow diagram illustrating another example of operation of a messaging server according to another exemplary embodiment of the invention;
Figure 6 is a flow diagram illustrating an example of operation of a sending user equipment according to an embodiment of the invention;
Figure 7 is a flow diagram illustrating an example of operation of a receiving user equipment according to an embodiment of the invention; and
Figure 8 is an exemplary block diagram block diagram of an entity capable of performing operation according to various embodiments of the invention.

### EXEMPLARY EMBODIMENTS OF THE INVENTION

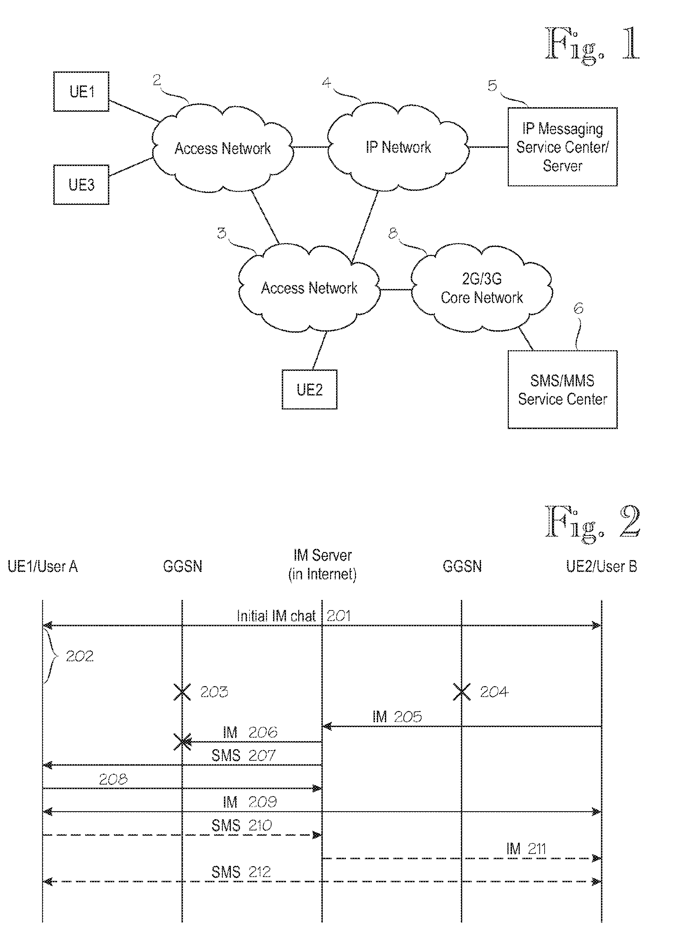

Referring to the example shown in Figure 1, user equipments UE1 and UE3 are connected to an access network 2 and UE 2 is connected to an access network 3. The access networks 2 and 3 may be wireless access networks (such as a 2G or 3G mobile communication network or a wireless local area network, WLAN) and the connection may be a wireless link. Alternatively, one or more of the access networks may be a wired access network (such as a local area network, LAN) and the connection may be a wired connection. The access networks 2 and 3 provide for the user equipments UE an access to one or more core networks, such as an Internet Protocol (IP) based network 4, or Internet, and a 2G or 3G core network 8, e.g. GSM (Global System for Mobile communication), GPRS (General Packet Radio Service), WCDMA (Wideband Code Division Multiple Access). In Figure 1, the IP network 4 represents any suitable packet data communication network environment, particularly IP network environment. Any number of messaging service centers, such as a server, may be connected to the IP network 4 and/or the access networks 2 and 3 to provide messaging services to the user equipments.

Example embodiments of the present invention will be described using Internet Protocol (IP) or Session Initiation Protocol (SIP) based messaging services as an example of the primary messaging service or delivery channel for the primary communication, and Short Message Service (SMS) or Multimedia Messaging Service (MMS) or Wireless Application Protocol (WAP) Push as an example of a secondary, outband messaging service or delivery channel for delivering a wake-up message. The invention is, however, not intended to be restricted to any examples described herein but the present invention may be applied to any messaging services.

The 3rd Generation Partnership Project (3GPP) IP Multimedia Subsystem (IMS) network architecture may be referred to as an example of the core network technologies wherein IP or SIP based messaging services may be provided. Examples of IP or SIP based messaging services include Push-to-talk over cellular (PoC), Instant messaging (IM), IMPS, SIMPLE IM, email, and Mobile email. In unified IP messaging services, such as a Converged IP Messaging (CPM) domain of the Open Mobile Alliance, OMA, many such messaging services, even the SMS and MMS, may be commonly supported. A present scenario of a possible architecture and operation of a Converged IP Messaging (CPM) domain is disclosed in the document "Converged IP Messaging Requirements, Candidate Version 1.0", 6 November 2007, OMA-RD-CPM-V1_0-20071106-C), which is incorporated by reference herein. As illustrated in the example of Figure 1, typical IP messaging services comprise a network entity or function 5, such as a server, a gateway, a service center or a like in IP network environment, while the user equipment comprises a corresponding peer entity or function, such as a client, agent or like. The IP network entity or function 5 may act as a store-and-forward entity where the messages are stored until the message is delivered or until the database storage time expires. In IMS network environment (not shown) may contain a Proxy Call Session Control Function (P-CSCF) and a Serving Call Session Control Function (S-CSCF). The P-CSCF is the UE's first contact point within the IMS. Functions of the P-CSCF include the forwarding of SIP messages received from the UE. These may be sent to the S-CSCF or the Interrogating Call Session Control Function (I-CSCF) depending on the type of message and procedure being carried out.

Examples of non-IP messaging services include the legacy mobile text message and multimedia services. A short message service (SMS), a multimedia messaging service (MMS), and Wireless Application Protocol (WAP) Push, are defined, for example, within the GSM and 3G mobile communication standards and it enables the point-to-point transmission of messages. Short messages and multimedia messages can be sent and received only with user equipment that support the SMS or MMS. Short messages and multimedia messages are sent to a short message service center (SMSC) or a multimedia messaging service center (MMSC), such as an SMS/MMS service center 6 shown in Figure 1, which acts as a store-and-forward center where the messages are stored until the message is delivered or until the database storage time expires.

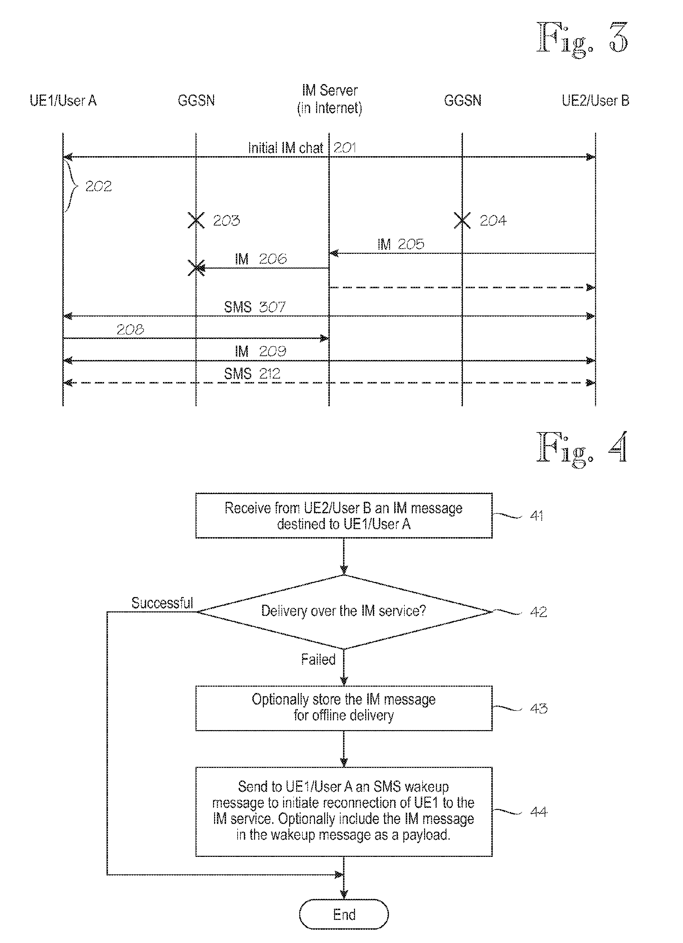

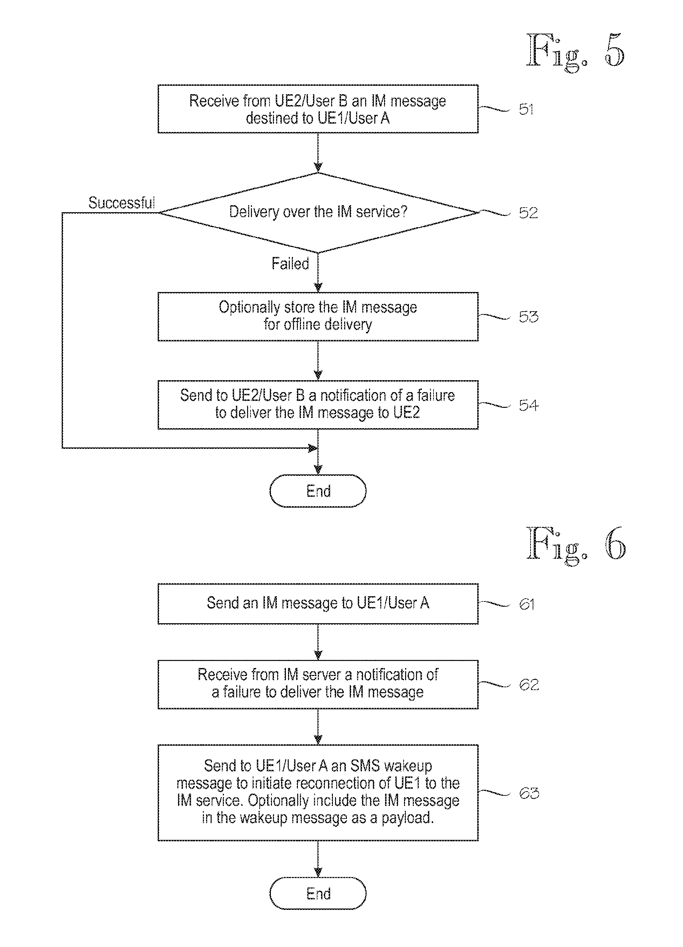

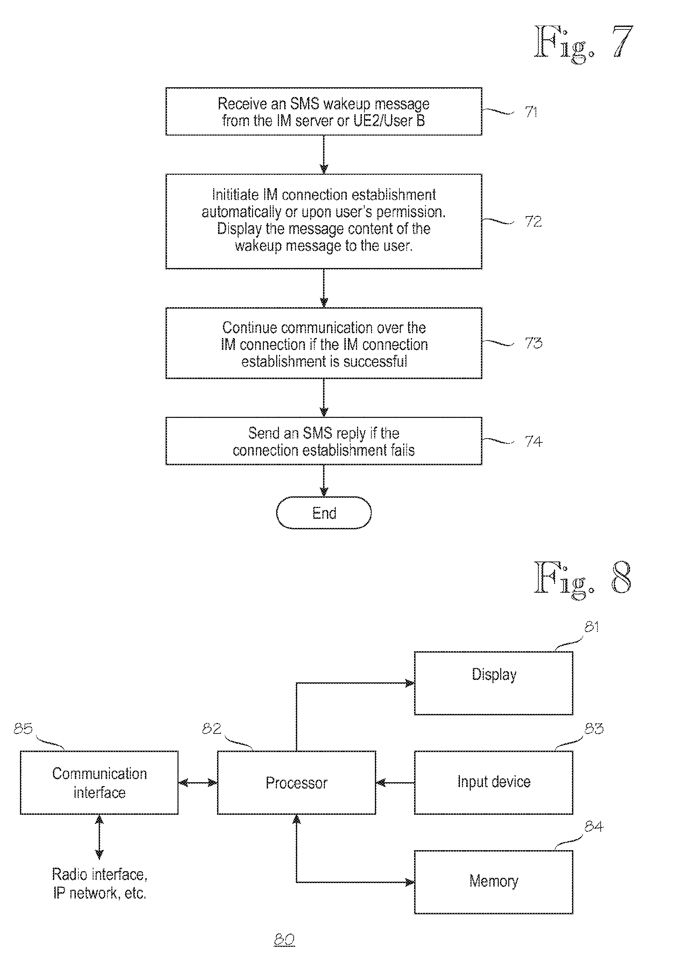

An aspect of the invention is now described by means of exemplary messaging events with reference to Figures 2 and 3. Example operation of the messaging server according to embodiments of the invention is illustrated in in Figures 4 and 5. Example operation of UE2 according to an embodiment of the present invention is illustrated in Figure 6. Example operation of UE1 according to an embodiment of the present invention is illustrated in Figure 7.

In the illustrated examples, the user equipment UE2 of the user B is capable of using at least one IP or SIP based messaging service, such as instant messaging (IM). These services are referred to commonly with IP/SIP/IM herein. The user equipment UE2 may optionally be capable of using at least one non-IP messaging service, such as SMS/MMS/WAP. The user equipment UE1 of the user A is capable of using two or more messaging services, one of them being IP or SIP based messaging service, such as instant messaging (IM), and at least one non-IP messaging service, such as SMS/MMS/WAP. UE1/UE2 may contain a unified messaging client. The user B may also have a presence service in UE2, allowing the user B to see the presence/availability of predefined group of users on a contact list. The contact list may indicate, for example, that user A having the user equipment UE1 is online/active/available in the IM service.

Let us first assume that user A and user B have an IP or SIP based messaging session, such as instant messaging (IM) session (a chat) via a messaging server, such as an IM server, in the Internet. The UE1 of the user A and the UE2 of the user B may be connected to the Internet via the same access network or via different access networks. In the example shown in Figures 2 and 3, the UE1 and UE2 are using the GPRS network(s) to access the server in the Internet. The main functions of the GGSN nodes involve interaction with external data networks. The GGSN includes PDP addresses and routing information, i.e. Serving GPRS Support Node (SGSN) addresses for active GPRS subscribers. The main functions of the SGSN are to detect new GPRS mobile stations in its service area, handle the process of registering new UEs along with the GPRS registers, send/receive data packets to/from the UE, and keep a record of the location of the UEs inside of its service area. The GGSN updates the location directory using routing information supplied by the SGSNs. The GGSN uses the routing information for tunneling the Protocol Data Units (PDUs) from external networks to the current location of the UE, i.e. to the serving SGSN, in accordance with the GPRS Tunneling Protocol (GTP). Tunneling means that the data packet is encapsulated into another data packet during transfer from one end of the tunnel to another. The GGSN also decapsulates data packets received from UEs and forwards them to the appropriate data network. In order to send and receive GPRS data, the UE activates the packet data address that it wants to use, by requesting a PDP activation procedure. This operation makes the UE known in the corresponding GGSN, and interworking with external data networks can commence. More particularly, one or more PDP contexts are created and stored in the UE and the GGSN and the SGSN. The PDP context defines different data transmission parameters, such as PDP type (e.g. X.25 or IP), PDP address (e.g. IP address) and Quality of Service (QoS). In other words, the PDP context defines a connection from the UE to the GGSN for an IP or SIP based service, such as the IM service.

During the initial IP/SIP/IM session or chat 201, messages are exchanged through the GPRS connections and the GGSNs to/from the UE1 and UE2. There is a silent period in the session/chat, and no messages are exchanged for a period of time (e.g. 5-10 minutes), step 202 in Figures 2 and 3. The GGSN monitor the communication activity on the PDP connection to/from the UE, and if there is no communication (e.g. messages) sent on the connection for a preset time, the GGSN assumes that the communication has ended and drops the connection in order to save network resources, steps 203 and 204 in Figures 2 and 3. As a result, both GGSNs in Figures 2 and 3 will delete the PDP contexts associated with the initial session 201, and UE1 and UE2 become unreachable from the Internet. However, the different GGSNs may have different timeout periods so that steps 203 and 204 may occur at different times. Further, one of the parties may not be in a mobile network at all during the initial session, i.e. such party may use a wired-network.

Later the user B may attempt to send an IP/SIP/IM message to user A over the IP/SIP/IM service (step 205 in Figures 2 and 3; step 61 in Figure 6). As user B is the originating user, a new connection/PDP context is setup from the UE2 in the GPRS/GGSN, and the IP/SIP/IM message is successfully sent to the IP/SIP/IM server. The message is received at the IP/SIP/IM server (steps 41 and 51 in Figures 4 and 5, respectively) that may check the status of the recipient user from a presence service or like, for example. If the presence service or like indicates recipient user is reachable via the IP/SIP/IM service the IP/SIP/IM server may attempt to deliver the message (step 206 in Figures 2 and 3; steps 42 and 52 in Figures 4 and 5, respectively). If the user A indeed was reachable via the IP/SIP/IM service, the delivery would be successful and the IP/SIP/IM session would continue normally (branch 'successful' from steps 42 and 52). However, in the examples herein the GGSN has previously dropped the UE1's connection from the IP/SIP/IM service in step 203 (i.e. deleted the PDP context), because there have not been any traffic on the connection for a preset period of time. Thus, the user A does not have an active PDP context and is unreachable, meaning that the message cannot be delivered to the user A (branch 'failed' from steps 42 and 52). Alternatively, the branch 'failed' may result when the status check from a presence service or like, for example, indicates that the recipient user is unreachable via the IP/SIP/IM service (in which case no delivery may be attempted). The IP/SIP/IM server may then store the IP/SIP/IM message to be delivered offline later, when the user A is again available for the IP/SIP/IM service (steps 43 and 53 in Figures 4 and 5, respectively).

In conventional systems the reachability problem due to the dropped connection may be avoided by sending keep-alive or other messages over the connection during the silent/idle periods, so that the GGSN will not drop the connection. Thus, both users would be always reachable for the IP/S1P/IM server through the "always-on" connections. However, as noted above, this approach significantly shortens the operation time of battery-powered user devices.

According to a first embodiment of the invention illustrated in Figures 2 and 4, the messaging server, such as the IP/SIP/IM server in the Internet, upon detecting that the delivery via an IP or SIP based messaging service, such the IM service, was unsuccessful, is arranged to send a wake-up message to the UE1 of the user A over another, outband messaging service or delivery channel, such as SMS, MMS, or WAP Push (step 207 in Figure 2; step 44 in Figure 4). The Internet server, the IP/SIP/IM server, may store the address/identity information of the user A for such secondary messaging service, or it may have an access to such information on another network element. In case of SMS, MMS, and WAP such information may be the directory (telephone) number of the user. The IP/SIP/IM server may prepare and send, either itself or in co-operation with one or more other network elements, a wake-up message with the secondary address/identity information. The wakeup message may contain predetermined information which indicates that it is a wake-up message and that an IP/SIP/IM connection should be setup to the server or the user B. According to an embodiment of the invention, the wakeup message may also contain the content of the original message or a part of it as a payload. According to a further embodiment of the invention, the wakeup message may contain merely the content of the original message; for example, if the user A is permanently or temporarily incapable of using the IP/SIP/IM client (e.g. when a packet data connection is unavailable), the conversation would still be allowed to continue, only using the secondary messaging service, such as SMS/MMS/WAP, as the bearer. In such embodiment, communication over SMS/MMS/WAP can be done end-to-end between UE1 and UE2, or the UE2 could use the standard IP/SIP/IM protocol and the conversion to SMS/MMS/WAP be done at the IP/SIP/IM server. The sender address/number in the wakeup message may be selected to be that of the user B or that of the server, depending on which entity the possible reply SMS/MMS/WAP should be sent to.

According to a second embodiment of the invention illustrated in Figures 3, 5 and 6, upon detecting that the delivery via an IP or SIP based messaging service, such as the IM service, is not possible (due to a failed delivery attempt or based on the unreachability indication obtained from the presence service or like, for example), the messaging server, such as the IP/SIP/IM server may be arranged to send a notification to the UE2 of the user B (step 54 in Figure 5). Upon receiving such notification (step 62 in Figure 6), or upon otherwise detecting the failure to delivery the IP/SIP/IM message, the UE2 may send a wake-up message to the UE1 of the user A over a another, outband messaging service or delivery channel, such as SMS, MMS, or WAP Push (step 307 in Figure 3; step 63 in Figure 6). In the UE2 the different addresses of the recipient user A are often readily available, e.g. the contact/phone book application, and the different addresses can be easily mapped in the UE2. In an embodiment of the invention, the failure of delivering the IP/SIP/IM message and the possibility of sending the wakeup message over the secondary outband messaging service(s), such as SMS/MMS/WAP, is (are) presented to the user B via a user interface, and the user B may select through the user interface whether and over which messaging service the wakeup message is sent. In another embodiment, the UE2 performs the resending automatically without intervention of the user B, when it receives the notification of failed delivery over the IP/SIP/IM messaging service. The UE2 may, however, notify the user B of the sending of the wakeup message. The wakeup message may contain predetermined information which indicates that it is a wake-up message and that an IP/SIP/IM connection should be setup to the server or the user B. According to an embodiment of the invention, the wakeup message may also contain the content of the original IP/SIP/IM message or a part of it as a payload. According to a further embodiment of the invention, the wakeup message may contain merely the content of the original message; for example, if the user A is permanently or temporarily incapable of using the IP/SIP/IM client (e.g. when a packet data connection is unavailable), the conversation would still be allowed to continue, only using the secondary messaging service, such as SMS/MMS/WAP, as the bearer. In such embodiment, communication over SMS/MMS/WAP may preferably be done end-to-end between UE1 and UE2.

In a modification of the second embodiment of the invention, the UE2 /user B may not send the initial IP/SIP/IM message (step 205) at all but it may detect directly from the presence service or like that the user A is unreachable via the IP/SIP/IM service. Then the UE2 /user B may immediately send a wake-up message to the UE1 of the user A over a another, outband messaging service or delivery channel, such as SMS, MMS, or WAP Push (step 307 in Figure 3; step 63 in Figure 6), as described above.

The advantage of the second embodiment of the invention is that the cost of sending the wakeup message using an alternative messaging service will be beared by the user B, since the message is sent directly from the UE2 of the user B instead of the IP/SIP/IM server. Moreover, the user B is usually aware of the cost of different mesaging services and thereby can select the least cost messaging service for sending the wakeup message. In the first embodiment of the invention where the IP/SIP/IM server is arranged to send the wakeup message, the cost of using the secondary outband messaging service would be beared by the IP/SIP/IM messaging service provider. This cost can be extremely high, for example in the case the IP/SIP/IM service provider is an Internet service provider, such as Twitter (twitter.com), the cost of SMS delivery can be very high for the service provider. Moreover, in order to use another messaging service, the IP/SIP/IM server should have the address of the recipient user A for the other service, e.g. the SMS/MMS/WAP address.

Example operation of the recipient UE1 upon receiving the wakeup message either from the IP/SIP/IM server as in Figure 2, or from the UE2 as in Figure 3, will be described below.

According to an embodiment of the invention, upon receiving the wakeup message, such as SMSIMMS/WAP (step 71 in Figure 7), the recipient UE1 recognizes the message as a wakeup message based on the predetermined information and triggers a connection setup procedure (e.g. PDP context creation) in a client application of the IP/SIP/IM based service in the UE (step 208 in Figures 2 and 3; step 72 in Figure 7). The IP/SIP/IM client of the user A reconnects to the IP/SIP/IM server, if the server is available, e.g. if it is possible to setup a PDP context for a packet data connection in the GPRS network.

According to an embodiment of the invention, the IP/SIP/IM client application establishes the IP/SIP/IM connection to the IP/SIP/IM server automatically in response to receiving the wake-up message (step 208 in Figures 2 and 3; step 72 in Figure 7), and optionally displays the content of the wake-up message to the user A through a user interface. If the connection setup is successful, the messaging continues over the new connection using the IP/SIP/IM messaging service (step 209 in Figures 2 and 3; step 73 in Figure 7). According to an embodiment of the invention, if the setup of the connection to the IP/SIP/IM server fails, the communication may stop, or the user A may continue the communication using the SMS/MMS/WAP as the bearer (step 74 in Figure 7). The communication over SMS/MMSNVAP may be done end-to-end between UE1 and UE2 (step 212 in Figures 2 and 3), or the UE2 could use the standard IP/SIP/IM protocol (step 211 in Figure 2), and the UE1 could use the SMS/MMS/WAP protocol (step 210 in Figure 2), and the conversion to SMS/MMS/WAP be done at the IP/SIP/IM server. The UE1 may send the possible reply SMS/MMS/WAP to an address/number presented as a sender address/number in the wakeup message. The user A may alternatively search the SMS/MMS/WAP address/number from the internal phonebook application of the UE1.

According to an embodiment of the invention, the IP/SIP/IM client application displays the content of the wake-up message to the user A through a user interface (possibly a normal SMS/MMS/WAP message), and establishes the IP/SIP/IM connection to the server only if permission is inputted by user A through the user interface (step 208 in Figure 2 and 3; step 72 in Figure 7). If the permission is inputted and the connection setup is successful, the messaging continues over the new connection using the IP/SIP/IM messaging service (step 209 in Figures 2 and 3; step 73 in Figure 7). According to an embodiment of the invention, if the setup of the connection to the IP/SIP/IM server fails, or the user A does not give permission to setup a connection, the communication may stop or the user A may continue the communication using the the SMS/MMS/WAP as the bearer (step 74 in Figure 7). The communication over SMS/MMS/WAP may be done end-to-end between UE1 and UE2 (step 212 in Figures 2 and 3), or the UE2 could use the standard IP/SIP/IM protocol, (step 211 in Figure 2), and the UE1 could use the SMS/MMS/WAP protocol (step 210 in Figure 2), and the conversion to SMS/MMS/WAP be done at the IP/SIP/IM server. The UE1 may send the possible reply SMS/MMS/WAP to an address/number presented as a sender address/number in the wakeup message. The user A may alternatively search the SMS/MMS/WAP address/number from the internal phonebook application of the UE1.

According to an embodiment of the invention, if the IP/SIP/IM client is not available, or if the wake-up message is configured not to trigger the connection setup to the server but to merely carry the content of the original IP/SIP/IM message, the UE1 may display the content of the wake-up message to the user A through a user interface as a normal SMS/MMS/WAP message. The conversation may then continue using the SMS/MMS/WAP as the bearer. The communication over SMS/MMS/WAP may be done end-to-end between UE1 and UE2, step 212, or the UE2 could use the standard IP/SIP/IM protocol, step 211, and the UE1 could use the SMS/MMS/WAP protocol, step 210, and the conversion to SMS/MMS/WAP be done at the IP/SIP/IM server. The UE1 may send the possible reply SMS/MMS/WAP to an address/number presented as a sender address/number in the wakeup message. The user A may alternatively search the SMS/MMS/WAP address/number from the internal phonebook application of the UE1.

According to an embodiment of the invention the wakeup message can be sent using OMA-specified Service Indication or Service Loading features, both of which allow for a HREF/URL to be included in the wakeup message, such as SMS/MMS/WAP The actual IM message can be sent as a specially formatted URL without breaking the letter of the specification. Commands directed at the client can also be embedded to the domain part of the URI.

In the case Service Indication, the message type is originally meant to be presented to the user directly. The information sent can, however, be captured by a client in the receiving end and appropriate action taken. Additionally, OMA Service Indication allows the inclusion of plain text message in which case no special formatting will be required.

The OMA Service Load messages are delivered directly to the appropriate client application without user intervention. The following message is an example of a valid OMA Service Load message containing instructions for the receiving client to reconnect to the IM service and an IM message "Are you at the store yet?" to be displayed for the user:

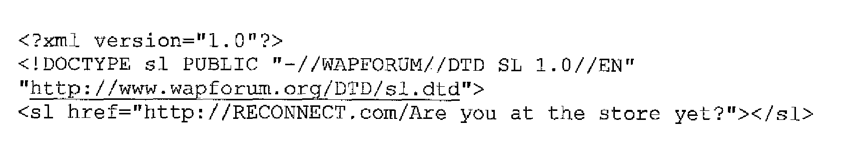

The present invention gives a good end user experience. For example, when both parties are connected to the IM server, the messaging is fast and conversational. When initiating a new chat session, there is always some delay before the receiving party takes the user device out of pocket and starts replying. Adding a bit more to this delay for first message is not inconvenient when the rest of the conversation will happen without noticeable technical delays. The typical network timeouts of 5-10 minutes are long enough for the user experience of continuing a paused conversation. If there are no messages during that period, the real-time conversation can be considered as ended. When the instant messaging connection has closed, then there is again an SMS delay for continuing the conversation. But after these minutes it is most likely that the receiving party does not have the user device at hand or at least is not looking at the device's display. Thus having a few seconds more technical delay in this situation does not much hurt the user experience.

The techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

User equipment may refer to any user communication device. A term "user equipment" as used herein may refer to any device having a communication capability, such as a wireless mobile terminal, a PDA, a smart phone, a personal computer (PC), a laptop computer, a desktop computer, etc. For example, the wireless communication terminal may be an UMTS or GSM/EDGE smart mobile terminal having S60 operating system from Nokia Corporation. Thus, the application capabilities of the device according to various embodiments of the invention may include native S60 applications available in the terminal, or subsequently installed applications. The messaging service center may be implemented in any network element, such as a server.

Reference is now made to Figure 8, which illustrates an exemplary block diagram of an entity 80 capable of performing operation according to various embodiments of the invention, such as the primary messaging service server or the user equipment. The entity 80 may generally include a processor, controller, or the like 82 connected to memory 84. The memory 84 may include volatile and/or non- volatile memory and typically stores content, data, or the like. For example, the memory 84 may store computer program code such as software applications or operating systems, information, data, content, or the like for the processor 82 to perform steps associated with operation of the entity in accordance with embodiments of the present invention. Also, for example, the memory 84 typically stores content transmitted from, or received by, the entity 80. Memory 84 may be, for example, random access memory (RAM), a hard drive, or other fixed data memory or storage device. The processor 82 may receive input from an input device 83 and may display information on a display 81. The processor 82 can also be connected to at least one communication interface 85 or other means for transmitting and/or receiving data, content, messages, or the like. Where the entity 80 provides wireless communication, such as in a UMTS, GSM, EDGE, WCDMA network, Bluetooth network, a wireless LAN network, or other mobile network, the processor 82 may operate with a wireless communication subsystem of the interface 85. Where the entity 80 provides an IP server with IP communication, the processor 82 may operate with an IP communication system of the interface 85. One or more processors, memory, storage devices, and other computer elements may be used in common by a computer system and subsystems, as part of the same platform, or processors may be distributed between a computer system and subsystems, as parts of multiple platforms. If the entity 80 is, for example, a mobile station or a network server, the entity 80 may also include modules such as a messaging service client/server and/or an application associated with the processor 82. These modules may be software and/or software-hardware components. For example, a messaging service client/server may include software capable of establishing, modifying, and terminating messaging sessions, to send and receive messages, etc. An application block may include, for example, a phone or contact book application in user equipment.

It will be obvious to a person skilled in the art that, as the technology advances, the inventive concept can be implemented in various ways. The invention and its embodiments are not limited to the examples described above but may vary within the scope of the claims.

## Claims

1. A method, comprising
detecting, at a first communication device, that a first message cannot be delivered to a recipient user device via a first messaging service,
sending, at said first communication device, a wake-up message to the recipient user device via a second messaging service to trigger a connection establishment for said first messaging service at said recipient user device, and
continuing messaging via said first messaging service over the new connection, if the connection establishment is successful.

2. A method as claimed in claim 1, wherein said detecting comprises
sending, at the first communication device, a first message to a recipient user device via a first messaging service,
detecting, at the first communication device, a failure in delivery of the first message to the recipient user device via the first messaging service.

3. A method as claimed in claim 1, wherein said detecting comprises detecting unreachability of the recipient user based on presence service or like.

4. A method as claimed in claim 1, 2, 3 or 4, comprising
including in said wake-up message at least portion of a content of said first message.

5. A method, comprising
receiving, at a recipient user device, a wake-up message via a second messaging service from a first communication device,
initiating, at said recipient user device, in response to said wake-up message a connection establisment for a first messaging service,
continuing messaging via said first messaging service using the connection, if the connection establishment is successful.

6. A method as claimed in claim 5, comprising
in response to detecting that said connection setup for said first messaging service is not possible in response to the wakeup message, continuing messaging via said second messaging service.

7. A method as claimed in claim 5 or 6, comprising
displaying a message content of the wake-up message to a user of the recipient user device.

8. A method as claimed in any one of claims 5 to 6, comprising
said connection establishment comprises establishing the connection for the first messaging service in response to said wake-up message only if permission is inputted by a user of the recipient user device through a user interface.

9. A method as claimed in any one of claims 5 to 6, comprising
said connection establishment comprises establishing the connection for the first messaging service automatically by the recipient user device in response to receiving said wake-up message.

10. A method as claimed in any one of claims 1 to 9, wherein said first messaging service comprises an Internet Protocol based messaging service, and wherein said second messaging service comprises a text message service or a multimedia messaging service over mobile communication media.

11. A method as claimed in any one of claims 1 to 10, wherein said first messaging service comprises an instant messaging service.

12. A method as claimed in any one of claims 1 to 11, wherein said second messaging service comprises a short message service, SMS, or a wireless application protocol, WAP, service.

13. A method as claimed in any one of claims 1 to 11, wherein the wakeup message is sent using OMA Service Indication or OMA Service Load message features embedded in the wakeup message according to the second messaging service.

14. A method as claimed in any one of claims 1 to 13, wherein said first communication device comprises a network server of said first messaging service that relays the messaging of the first messaging service between said first communication device and an originating user device.

15. A method as claimed in any one of claims 1 to 13, wherein said first communication device comprises a user device.

16. A communication device comprising means for performing the method steps according to any one of claims 1 to 15.

17. A program containing an executable code which performs steps of any one of method claims 1 to 15 when executed in a computing device.
